# EUROPEAN PATENT SPECIFICATION

(11) **EP 3 778 146 B1**
(45) Date of publication and mention of the grant of the patent: **31.05.2023**
(21) Application number: 19780807.4
(22) Date of filing: 05.04.2019
(51) Int. Cl.: G05D 1/02, A01D 34/00

(54) **MOBILE ROBOT AND METHOD FOR CONTROLLING MOBILE ROBOT**
MOBILER ROBOTER UND VERFAHREN ZUR STEUERUNG EINES MOBILEN ROBOTERS
ROBOT MOBILE ET PROCÉDÉ POUR COMMANDER UN ROBOT MOBILE

(30) Priority: 06.04.2018 US 201862653567 P
(43) Date of publication of application: 17.02.2021
(73) Proprietor: LG Electronics Inc., Yeongdeungpo-gu Seoul 07336 (KR)
(72) Inventor: LEE, Jaehoon, Seoul 08592 (KR); CHOI, Kyuchun, Seoul 08592 (KR); WOO, Jongjin, Seoul 08592 (KR); KIM, Dongseong, Seoul 08592 (KR); KIM, Hyungsub, Seoul 08592 (KR); SHIN, Seungin, Seoul 08592 (KR); YU, Kyungman, Seoul 08592 (KR); JEONG, Jaehoon, Seoul 08592 (KR); NAM, Dongkyun, Seoul 08592 (KR); PARK, Jongil, Seoul 08592 (KR); JOO, Hyungkook, Seoul 08592 (KR)
(74) Representative: Ter Meer Steinmeister & Partner
(86) International application number: PCT/KR2019/004057
(87) International publication number: WO 2019/194631

(56) References cited:
- KR-A- 20090 022 217
- KR-A- 20090 074 545
- KR-A- 20160 128 123
- KR-B1- 100 645 815
- KR-B1- 101 513 050
- US-A- 5 032 775
- US-A- 6 142 252
- US-A1- 2014 324 246
- US-A1- 2018 064 024

## Description

### BACKGROUND OF THE DISCLOSURE

### Field of the disclosure

The present disclosure relates to a moving robot which effectively constitutes a cleaning path of the moving robot and a control method of the moving robot.

### Related Art

A robot has been developed for industrial use and has been responsible for a portion of factory automation. In recent years, a field of application of the robot has been further expanded, a medical robot, an aerospace robot, or the like has been developed, and a home robot that can be used in a general home is also manufactured. Among these robots, a robot capable of traveling by itself is called a moving robot. A typical example of the moving robot used in an outdoor environment of a home is a lawn mowing robot.

In a case of a moving robot autonomously traveling indoors, a movable area is limited by a wall or furniture, but in a case of a mobile robot autonomously traveling outdoors, there is a need to set a movable area in advance. In addition, there is a need to limit the movable area so that the lawn mowing robot travels in an area where grass is planted.

In the related art (Korean Patent Publication Laid-Open No. 2015-0125508), a wire is buried to set an area in which a lawn mower robot is to be moved, and the lawn mower robot senses a magnetic field formed by a current flowing through the wire and can move within an area set by the wire.

In addition, according to the related art, the lawn mower robot does not accurately recognize a position of a charging station, and continuously travels along the boundary wire and then finds the position of the charging station and performs charging.

Moreover, according to the related art, a traveling area set for a convenience and efficiency of cleaning is divided into a plurality of areas and cleaning is sequentially started. However, since the lawn mower robot is driven outdoors, it is difficult for the lawn mower rotor to map the traveling zone through an image and accurately recognize a current position on the map, as if driving indoors.

In addition, the lawn mower robot of the related art indirectly estimates the position of the lawn mower robot by a method such as detecting the number of rotations of a wheel. However, even in this case, there is a problem that the position of the lawn mower robot cannot be accurately recognized due to problems such as slip.

After all, since it is difficult to accurately recognize the current position of the lawn mower robot, when a work with respect to one of a plurality of traveling areas of the lawn mower robot is completed, the lawn mower robot does not move from the position to another traveling and finds the charging stand while continuously moving along the wire again. Then, when the lawn mower robot finds the charging stand, the lawn mower robot recognizes the current position on the map again through a position of the charging stand, moves from the charging station to a starting point of another traveling area, and thereafter, starts a work in another traveling area.

In this way, if the lawn mower robot returns to the charging station in order to recognize the current position on the map again, a traveling distance of the lawn mower robot becomes longer and a battery life of the lawn mower robot becomes shorter. Moreover, in a course in which the lawn mower robot returns to the charging station, the lawn mower robot is returned along the same path, and thus, there is a problem that the ground is dug along the return path of the lawn mower robot, and the dug ground interferes with the operation of the lawn mower robot.

In addition, as described above, when the lawn mower robot returns to the charging station to travel to another traveling area and moves to another traveling area again, a moving distance becomes long, a loss in use time occurs, and there is a problem that a user does not feel reliable.

United State Patent Publication No. 20180064024 discloses that a traveling area is divided into a plurality of areas based on a vertex of the traveling area, or the like. However, in this related art, there is a problem that an effective work cannot be performed only by dividing the traveling area. US 2018/064024 A1 discloses a lawn mowing robot which includes a body, a driving unit driven such that the body moves within an operation region, and a controller setting first information related to at least one reference line using coordinate information corresponding to vertices included in a polygon forming an operation region and setting second information related to a plurality of regions such that the operation region is divided into the plurality of regions using the first information. US 5 032 775 A discloses a control apparatus for controlling a plane working robot comprising a running unit for running on a plane surface, a steering unit for steering the running unit in a predetermined direction, a working unit for performing a predetermined plane working such as cleaning, and a detecting unit for detecting various and actual information about running direction and distance of the robot and an obstacle on the plane surface, thus permitting the working robot to take an optimum running path while avoiding an obstacle on the basis of sense outputs from the detecting unit to conduct a work. US 6 142 252 A discloses an autonomous vehicle which detects an interruption in a wall, a plurality of optical distance measurement sensors provided in a driving unit measures the distance to a plurality of points of an object of interest located ahead. US 2014/324246 A1 discloses an autonomous working device, in particular an autonomous lawn mower, being configured to travel across a surface that is to be worked. The working device includes a processing unit configured to divide the surface that is to be worked into at least two dynamic partial surfaces to be traveled across separately by the working device.

### SUMMARY

An object of the present disclosure is to provide a moving robot and a control method of the moving robot which continuously perform work without returning to a charging station again after completing a work of one traveling zone.

Another object of the present disclosure is to provide a moving robot and a control method of the moving robot capable of reducing the number of times the moving robot returns to the charging station to recognize a correct position on a map.

Still another object of the present disclosure is to provide a moving robot and a control method of the moving robot capable of reducing damage to a lawn near the charging station.

Still another object of the present disclosure is to provide a moving robot and a control method of the moving robot capable of performing an efficient work while sequentially working on a number of traveling areas and using a limited battery with maximum efficiency.

Still another object of the present disclosure is to provide a moving robot and a control method of the moving robot capable of sharing a sensor which recognizes a boundary of a travel path without attaching a separate additional sensor.

In order to achieve the above-described objects, in a moving robot and a control method of a moving robot according to the present disclosure, the moving robot performs a first pattern traveling in a first traveling area and performs a second pattern traveling in a direction intersecting the first pattern traveling if the traveling in the first traveling area is completed.

Specifically, according to the present disclosure, there is provided a moving robot including: a body which forms an appearance; a traveler which moves the body; a boundary signal detector which detects a boundary signal generated in a boundary of a traveling area; an azimuth sensor which calculates a direction angle of the body; and a controller which defines the traveling area based on the boundary signal and divides the traveling area into a plurality of traveling areas including at least a first traveling area and a second traveling area, in which the controller controls the traveler so that the moving robot performs a first pattern traveling in the first traveling area at a first direction angle, completes the traveling of the first traveling area, and thereafter, performs a second pattern traveling at a second direction angle intersecting the first direction angle.

The first direction angle and the second direction angle may be 88° to 92°.

The controller may randomly calculate the second direction angle.

The controller is configured to calculate one value, which is randomly selected from values having angles of 85° to 95° with respect to the first direction angle, as the second direction angle.

The controller may control the traveler so that the moving robot performs the second pattern traveling at a site where the moving robot completes the traveling in the first traveling area.

The first direction angle may be calculated parallel to the boundary of the traveling area adjacent to the traveling starting point of the first pattern traveling.

The boundary signal detector may detect a docking position signal generated in a docking device, and
the controller may control the traveler so that the moving robot returns to the docking device when a preset time elapses after the moving robot starts the first pattern traveling.

The controller may control the traveler so that the moving robot returns to the docking device when the controller determines that remaining battery power is insufficient while the moving robot performs the pattern traveling.

The boundary signal detector may distinguish between the docking position signal and the boundary signal by a difference in a direction of a magnetic field.

A traveling direction of the second pattern traveling may be a direction away from a boundary of the traveling area adjacent to an end point of the first pattern traveling.

A traveling direction of the second pattern traveling may be a direction away from the first traveling area.

The boundary signal detector may include a magnetic field sensor.

Moreover, according to the present disclosure, there is provided a control method of a moving robot, including: a division step of defining a traveling area based on a boundary signal and dividing the traveling area into at least a first traveling area and a second traveling area; a first pattern traveling step of a moving robot performing a first pattern traveling in the first traveling area at a first direction angle; and a second pattern traveling step of the moving robot performing a second pattern traveling at a second direction angle interesting the first direction angle after completing the first pattern traveling.

The control method of a moving robot may further include a movement step of the moving robot moving to a starting point of the first pattern traveling along a boundary of the traveling area in a docking device before the first pattern traveling step.

The control method of a moving robot may further include a homing step of the moving robot returns to a docking device when a preset time elapses after the moving robot starts the first pattern traveling.

The control method of a moving robot may further include a homing step of the moving robot returning to a docking device when the moving robot determines that remaining battery power is insufficient while the moving robot performs the pattern traveling.

According to the present disclosure, the moving robot can continuously perform the work without returning to the charging station again after completing a work in one traveling zone, thereby improving the user's sense of trust. Moreover, since the moving robot does not frequently return to the charging station for accurate location recognition on a map, there is an advantage of preventing damages around a wire moving to the charging station.

In addition, according to the present disclosure, it is possible to the number of times the moving robot returns to the charging station to recognize a correct position on the map. Accordingly, it is possible to reduce a movement time and an energy loss generated when the moving robot returns to the charging station during the traveling and then, moves to the traveling zone again, and thus, the work can be effectively performed, and it is possible to effectively use a battery.

Moreover, according to the present disclosure, after cleaning in one traveling area is completed, the pattern traveling having another direction angle is performed. Accordingly, there is an advantage that it is possible to prevent only some areas of the traveling areas from being repeatedly performed due to the pattern traveling having the same direction angle.

Moreover, in the present disclosure, recognizing the position of the charging station, recognizing the boundary of the traveling area, and recognizing the adjacent boundary area are all performed by one sensor using a magnetic field signal, the position of the charging station and the boundary are distinguished and a homing path is recognized by a direction difference, a distribution difference, an intensity difference. Accordingly, there are advantages that a manufacturing cost is reduced and a control burden of the controller is reduced.

Moreover, according to the present disclosure, a simple configuration is added in which a conductive wire is disposed inside the docking device. Accordingly, there are advantages that the manufacturing cost is reduced, the boundary wires constituting the boundary can be used in common, and the boundary wires can be driven by one power source.

### BRIEF DESCRIPTION OF THE DRAWINGS

FIG. 1 a perspective view illustrating a moving robot of an embodiment of the disclosure.
FIG. 2 is an elevational view when viewing a front surface of the moving robot of FIG. 1.
FIG. 3 is an elevational view when viewing a right surface of the moving robot of FIG. 1.
FIG. 4 is an elevational view when viewing a bottom surface of the moving robot of FIG. 1.
FIG. 5 is a perspective view illustrating a docking device docking the moving robot 100 of FIG. 1.
FIG. 6 is an elevational view when the docking device 200 of FIG. 5 is viewed from the front.
FIG. 7a is a view when a reference wire of an embodiment of the present disclosure is viewed from rear.
FIG. 7b is a view when the reference wire of the embodiment of the present disclosure is viewed from one side.
FIG. 8 is a block diagram illustrating a control relationship of the moving robot 100 of FIG. 1.
FIG.9 is a view of a pattern traveling of the moving robot of an embodiment of the disclosure.
FIGS.10-13 are views of a traveling method of the moving robot of an embodiment of the disclosure.
FIG. 14 is a flowchart illustrating a control method of a moving robot of an embodiment of the present disclosure.

### DESCRIPTION OF EXEMPLARY EMBODIMENTS

Expressions referring to directions such as "front(F) / rear(R) / left(Le) / right(Ri) / up (U) / down (D)" mentioned below are defined as indicated in the drawings. However, the expressions are only to explain the present disclosure so that the present disclosure can be clearly understood, and the directions may be differently defined depending on a criterion.

Use of terms "first and second" in front of components mentioned below is only to avoid confusion of the referred component, and is independent of an order, importance, or master/slave relationship between the components. For example, an invention including only a second component without a first component can be implemented.

In the drawings, a thickness or a size of each component is exaggerated, omitted, or schematically illustrated for convenience and clarity of the explanation. The size and area of each component do not entirely reflect the actual size or area.

Moreover, an angle and a direction mentioned in describing a structure of the present disclosure are based on those described in the drawings. In description of a structure in the specification, if a reference point and a positional relationship with respect to the angle are not explicitly mentioned, reference is made to the related drawings.

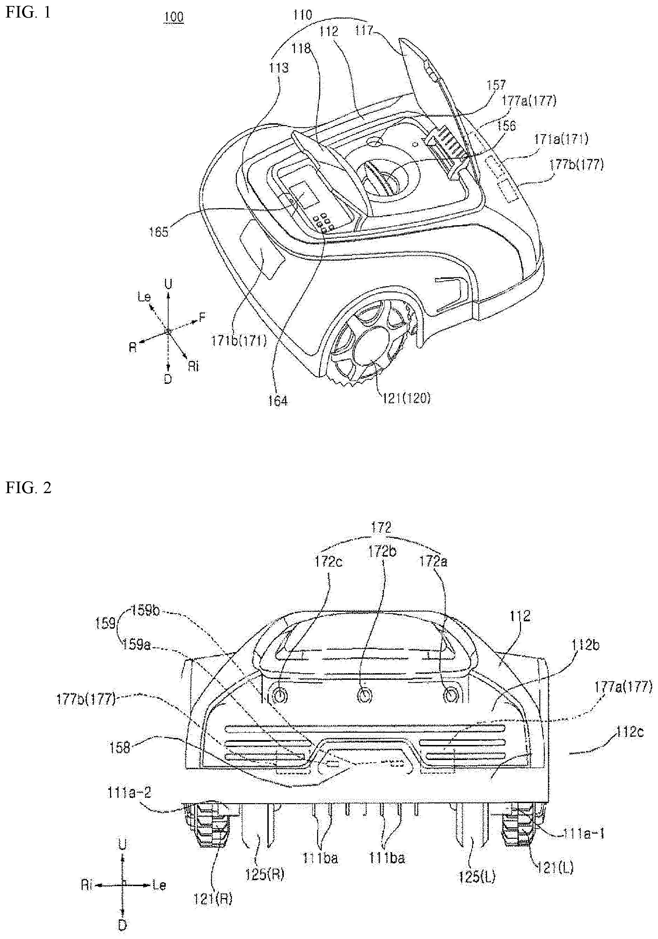

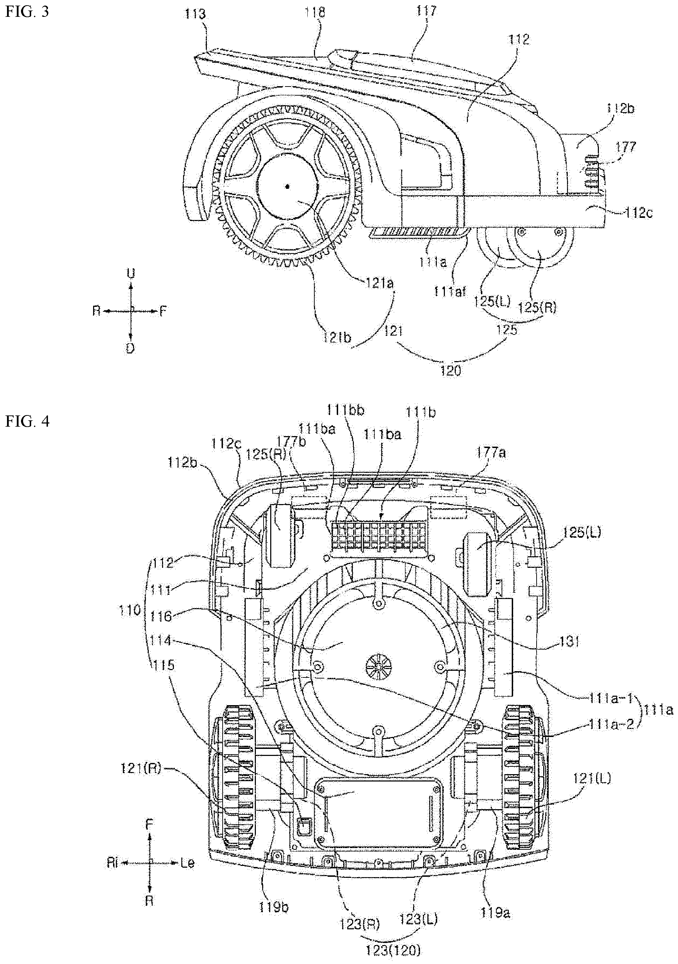

Hereinafter, a lawn mowing robot 100 of moving robots will be described as an example with reference to FIGS. 1 to 6, but the present disclosure is not limited thereto.

Referring to FIGS. 1 to 4, the moving robot 100 includes a body 110 which forms an appearance. The body 110 forms an interior space. The moving robot 100 includes a traveler 120 which moves the body 110 with respect to a traveling surface. The moving robot 100 includes an operator 130 which performs a predetermined work.

The body 110 includes a frame 111 to which the driving motor module 123 to be described later is fixed. A blade motor 132 to be described later is fixed to the frame 111. The frame 111 supports a battery to be described later. The frame 111 provides a skeleton structure which supports various other parts. The frame 111 is supported by an auxiliary wheel 125 and a driving wheel 121.

The body 110 includes a side blocking portion 111a for preventing a finger of a user from entering a blade 131 from both sides of the blade 131. The side blocking portion 111a is fixed to the frame 111. The side blocking portion 111a is disposed to protrude downward compared to a bottom surface of the other portion of the frame 111. The side blocking portion 111a is disposed to cover an upper portion of a space between the driving wheel 121 and the auxiliary wheel 125.

A pair of side blocking portions 111a-1 and 111a-2 are disposed right and left with the blade 131 therebetween. The side blocking portion 111a is disposed to be spaced apart at a predetermined distance from the blade 131.

A front surface 111af of the side blocking portion 111a is formed to be round. The front surface 111af forms a surface which is bent upward to be rounded forward from a bottom surface of the side blocking portion 111a. By using the shape of the front surface 111af, when the moving robot 100 moves forward, the side blocking portion 111a can easily ride over a lower obstacle below a predetermined reference.

The body 110 includes a front blocking portion 111b for preventing the finger of the user from entering the blade 131 in front of the blade 131. The front blocking portion 111b is fixed to the frame 111. The front blocking portion 111b is disposed to cover a portion of an upper portion of a space between the pair of auxiliary wheels 125L and 125R.

The front blocking portion 111b includes a protruding rib 111ba protruding downward compared to a bottom surface of the other portion of the frame 111. The protruding rib 11 1ba extends in a front-rear direction. An upper end portion of the protruding rib 111ba is fixed to the frame 111, and a lower end portion of the protruding rib 111ba forms a free end.

A plurality of protruding ribs 111ba may be spaced apart in a right-left direction. The plurality of protruding ribs 111ba may be disposed parallel to each other. A gap is formed between two adjacent protruding ribs 111ba.

A front surface of the protruding rib 111ba is formed to be round. The front surface of the protruding rib 111ba forms a surface which is bent upward to be rounded forward from a bottom surface of the protruding rib 111ba. By using the shape of the front surface of the protruding rib 111ba, when the moving robot 100 moves forward, the protruding rib 111ba 111a can easily ride over a lower obstacle below a predetermined reference.

The front blocking portion 111b includes an auxiliary rib 111bb to assist stiffness. The auxiliary rib 111bb for reinforcing stiffness of the front blocking portion 111b is disposed between upper end portions of the two adjacent protruding ribs 111ba. The auxiliary rib 111bb may be formed to protrude downward and extend in a lattice shape.

A caster (not illustrated) for rotatably supporting the auxiliary wheel 125 is disposed on the frame 111. The caster is rotatably disposed with respect to the frame 111. The caster is rotatably provided about a vertical axis. The caster is disposed below the frame 111. A pair of casters corresponding to the pair of auxiliary wheels 125 is provided.

The body 110 includes a case 112 which covers the frame 111 from above. The case 112 forms an upper surface and front/rear/left/right surfaces of the moving robot 100.

The body 110 may include a case connector (not illustrated) which fixes the case 112 to the frame 111. The case 112 may be fixed to an upper end of the case connector. The case connector may be disposed to be movable in the frame 111. The case connector may be disposed to be movable only in an up-down direction with respect to the frame 111. The case connector may be provided to be able to be movable only within a predetermined range. The case connector is movable integrally with the case 112. Accordingly, the case 112 is movable relative to the frame 111.

The body 110 includes a bumper 112b disposed in a front portion thereof. The bumper 112b absorbs an impact when the bumper 112b comes in contact with an external obstacle. In a front surface portion of the bumper 112b, a bumper groove is formed, which is recessed rearward and formed to be elongated in the right-left direction. A plurality of bumper grooves may be disposed spaced apart in the up-down direction. A lower end of the protruding rib 111ba is disposed at a lower position than a lower end of the auxiliary rib 111bb.

In the bumper 112b, a front surface and right and left surfaces are formed to be connected to each other. The front surface and the side surfaces of the bumper 112b are connected to each other to be rounded.

The body 110 may include a bumper auxiliary portion 112c which is disposed to surround an outer surface of the bumper 112b. The bumper auxiliary part 112c is coupled to the bumper 112b. The bumper auxiliary portion 112c surrounds a lower portion and lower portions of right and left sides of a front surface of the bumper 112b. The bumper auxiliary portion 112c may cover the front surface and lower half portions of the right and left sides of the bumper 112b.

A front end surface of the bumper auxiliary portion 112c is disposed in front of a front end surface of the bumper 112b. The bumper auxiliary portion 112c forms a surface protruding from a surface of the bumper 112b.

The bumper auxiliary portion 112c may be formed of a material which is advantageous for shock absorption, such as rubber. The bumper auxiliary part 112c may be formed of a flexible material.

The frame 111 may include a movable fixing portion (not illustrated) to which the bumper 112b is fixed. The movable fixing portion may be disposed to protrude upward from the frame 111. The bumper 112b may be fixed to an upper end portion of the movable fixing portion.

The bumper 112b may be disposed to be movable within a predetermined range with respect to the frame 111. The bumper 112b is fixed to the movable fixing portion and can move integrally with the movable fixing portion.

The movable fixing portion may be disposed to be movable with respect to the frame 111. The movable fixing portion may be provided so that the movable fixing portion is rotatable within a predetermined range with respect to the frame 111 about a virtual rotation axis. Accordingly, the bumper 112b may be rotatably provided integrally with the movable fixing portion with respect to the frame 111.

The body 110 includes a handle 113. The handle 113 may be disposed on a rear side of the case 112.

The body 110 includes a battery input portion 114 through which a battery is taken in or out. The battery input portion 114 may be disposed on a bottom surface of the frame 111. The battery input unit 114 may be disposed on a rear side of the frame 111.

The body 110 includes a power switch 115 for turning on/off power of the moving robot 100. The power switch 115 may be disposed on the bottom surface of the frame 111.

The body 110 includes a blade protector 116 which covers a lower side of a central portion of the blade 131. The blade protector 116 is provided so that a blade of a centrifugal portion of the blade 131 is exposed, but the central portion of the blade 131 is covered.

The body 110 includes a first opening/closing unit 117 which opens and closes a portion where a height adjuster 156 and a height display 157 are disposed. The first opening and closing portion 117 is hinged to the case 112 and is provided to enable opening and closing operations. The first opening/closing portion 117 is disposed on an upper surface of the case 112.

The first opening/closing portion 117 is formed in a plate shape, and covers upper sides of the height adjuster 156 and the height display 157 in a closed state.

The body 110 includes a second opening/closing unit 118 for opening and closing a portion where a display module 165 and an input unit 164 are disposed. The second opening/closing unit 118 is hinged to the case 112 and is provided to enable opening and closing operations. The second opening/closing portion 118 is disposed on the upper surface of the case 112. The second opening/closing unit 118 is disposed behind the first opening/closing unit 117.

The second opening/closing unit 118 is formed in a plate shape, and covers the display module 165 and the input unit 164 in a closed state.

An openable angle of the second opening/closing unit 118 is preset to be smaller than an openable angle of the first opening/closing unit 117. Accordingly, even in an open state of the second opening/closing unit 118, the user can easily open the first opening/closing unit 117, and the user can easily operate the height adjuster 156. In addition, even in the open state of the second opening/closing unit 118, the user can visually check a content of the height display 157.

For example, the openable angle of the first opening/closing unit 117 may be provided to be about 80 to 90° based on the closed state. For example, an openable angle of the second opening/closing unit 118 may be provided to be about 45 to 60° based on the closed state.

In the first opening/closing unit 117, a rear end thereof is raised upward with a front end thereof as a center, and thus, the first opening/closing unit 117 is opened. Moreover, in the second opening/closing unit 118, a rear end thereof is raised upward with a front end thereof as a center, and thus, the second opening/closing unit 118 is opened. Accordingly, the user can open and close the first opening/closing unit 117 and the second opening/closing unit 118 from a rear side of the lawn mowing robot 100, which is a safe area even when the lawn mowing robot 100 moves forward. In addition, the opening operation of the first opening/closing unit 117 and the opening operation of the second opening/closing unit 118 may be prevented from interfering with each other.

The first opening/closing unit 117 may be provided to be rotatable with respect to the case 112, about a rotation axis extending in the right-left direction on the front end of the first opening/closing unit 117. The second opening/closing unit 118 may be provided to be rotatable with respect to the case 112, about a rotation axis extending in a right-left direction on the front end of the second opening/closing unit 118.

The body 110 may include a first motor housing 119a accommodating a first driving motor 123(L) therein, and a second motor housing 119b accommodating the second driving motor 123(R) therein. The first motor housing 119a may be fixed to a left side of the frame 111, and the second motor housing 119b may be fixed to a right side of the frame 111. A right end of the first motor housing 119a is fixed to the frame 111. A left end of the second motor housing 119b is fixed to the frame 111.

The first motor housing 119a is formed in a cylindrical shape forming a height from side to side. The second motor housing 119b is formed in a cylindrical shape forming a height from side to side.

The traveler 120 includes a drive wheel 121 which is rotated by a driving force of the drive motor module 123. The traveler 120 may include at least one pair of drive wheels 121 which is rotated by the driving force of the drive motor module 123. The driving wheel 121 includes a first wheel 121(L) and a second wheels 121(R) provided on the left and right sides so as to be independently rotatable. The first wheel 121(L) is disposed on the left side, and the second wheel 121(R) is disposed on the right side. The first wheel 121(L) and the second wheel 121(R) are spaced apart from side to side. The first wheel 121(L) and the second wheel 121(R) are disposed on a lower rear side of the body 110.

The first wheel 121(L) and the second wheel 121(R) are provided to be rotatable independently so that the body 110 can rotate and move forward with respect to the ground. For example, when the first wheel 121(L) and the second wheel 121(R) rotate at the same rotational speed, the body 110 may move forward with respect to the ground. For example, when the rotational speed of the first wheel 121(L) is faster than the rotational speed of the second wheel 121(R) or when a rotational direction of the first wheel 121(L) and a rotational direction of the second wheel 121(R) are different from each other, the body 110 may rotate with respect to the ground.

The first wheel 121(L) and the second wheel 121(R) may be formed larger than the auxiliary wheel 125. A shaft of the first driving motor 123 (L) may be fixed to a center portion of the first wheel 121(L), and a shaft of the second driving motor 123(R) may be fixed to a center portion of the second wheel 121(R).

The driving wheel 121 includes a wheel outer peripheral portion 121b which is in contact with the ground. For example, the wheel outer portion 121b may be a tire. A plurality of protrusions for increasing a frictional force with the ground may be formed on the wheel outer peripheral portion 121b.

The driving wheel 121 may include a wheel frame (not illustrated) which fixes the wheel outer peripheral portion 121b and receives power from the motor 123. The shaft of the motor 123 is fixed to a center portion of the wheel frame, and thus, a rotational force can be transmitted to the wheel frame. The wheel outer peripheral portion 121b is disposed to surround a periphery of the wheel frame.

The driving wheel 121 includes a wheel cover 121a covering an outer surface of the wheel frame. The wheel cover 121a is disposed in a direction opposite to a direction in which the motor 123 is disposed based on the wheel frame. The wheel cover 121a is disposed at the center portion of the wheel outer peripheral portion 121b.

The traveler 120 includes the driving motor module 123 which generates a driving force. The traveler 120 includes the drive motor module 123 which provides the driving force to the driving wheel 121. The driving motor module 123 includes the first driving motor 123(L) which provides the driving force to the first wheel 121(L), and the second driving motor 123(R) which provides the driving force to the second wheel 121(R). The first driving motor 123(L) and the second driving motor 123(R) may be disposed spaced apart from side to side. The first driving motor 123(L) may be disposed on a left side of the second driving motor 123(R).

The first driving motor 123(L) and the second driving motor 123(R) may be disposed on the lower portion of the body 110. The first driving motor 123(L) and the second driving motor 123(R) may be disposed at the rear portion of the body 110.

The first driving motor 123(L) may be disposed on a right side of the first wheel 121(L), and the second driving motor 123(R) may be disposed on a left side of the second wheel 121(R). The first driving motor 123(L) and the second driving motor 123(R) are fixed to the body 110.

The first driving motor 123 (L) is disposed inside the first motor housing 119a, and the motor shaft may protrude to the left. The second driving motor 123(R) is disposed inside the second motor housing 119b, and the motor shaft may protrude to the right.

In the present embodiment, the first wheel 121(L) and the second wheel 121(R) are directly connected to a rotating shaft of the first driving motor 123(L) and a rotating shaft of the second driving motor 123(R), respectively. However, a component such as a shaft may be connected to the first wheel 121(L) and the second wheel 121(R), a rotational force of the motors 123(L) and 123(R) may be transmitted to the wheels 121a and 120b via a gear or chain.

The traveler 120 may include the auxiliary wheel 125 which supports the body 110 together with the driving wheel 121. The auxiliary wheel 125 may be disposed in front of the blade 131. The auxiliary wheel 125 is a wheel which does not receive the driving force by the motor, and serves to assist the body 110 with respect to the ground. A caster supporting a rotating shaft of the auxiliary wheel 125 is coupled to the frame 111 to be rotatable about a vertical axis. The first auxiliary wheel 125(L) disposed on the left side and the second auxiliary wheel 125(R) disposed on the right side may be provided.

The operator 130 is provided to perform a predetermined work. The operator 130 is disposed on the body 110.

For example, the operator 130 may be provided to perform works such as cleaning or lawn mowing. As another example, the operator 130 may be provided to perform a work such as transporting an object or finding an object. As still another example, the operator 130 may perform a security function for detecting an external intruder or a dangerous situation.

In the present embodiment, the operator 130 is described as performing mowing. However, a type of a work to be performed by the operator 130 may be various, and need not be limited to the example of the description.

The operator 130 may include the blade 131 rotatably provided to mow the lawn. The operator 130 may include a blade motor 132 which provides a rotational force to the blade 131.

The blade 131 is disposed between the driving wheel 121 and the auxiliary wheel 125. The blade 131 is disposed on the lower portion of the body 110. The blade 131 is provided to be exposed from the lower side of the body 110. The blade 131 rotates around a rotation axis extending in an up-down direction to mow the lawn.

The blade motor 132 may be disposed in front of the first wheel 121(L) and the second wheel 121(R). The blade motor 132 is disposed in a lower portion of a central portion in an inner space of the body 110.

The blade motor 132 may be disposed behind the auxiliary wheel 125. The blade motor 132 may be disposed in the lower portion of the body 110. The rotational force of the motor shaft is transmitted to the blade 131 using a structure such as a gear.

The moving robot 100 includes a battery (not illustrated) which supplies power to the driving motor module 123. The battery provides power to the first driving motor 123(L). The battery provides power to the second driving motor 123(R). The battery may supply power to the blade motor 132. The battery may provide power to a controller 190, an azimuth sensor 176, and an output unit 165. The battery may be disposed on a lower side of a rear portion in the inner space of the body 110.

The moving robot 100 is provided to change a height of the blade 131 with respect to the ground, and thus, can change a mowing height of the grass. The moving robot 100 includes the height adjuster 156 for the user to change the height of the blade 131. The height adjuster 156 may include a rotatable dial, and the dial is rotated to change the height of the blade 131.

The moving robot 100 includes the height display 157 which displays a level of the height of the blade 131. When the height of the blade 131 is changed according to an operation of the height adjuster 156, the height level displayed by the height display 157 is also changed. For example, the height display 157 may display a predicted height value of the lawn after the moving robot 100 performs lawn mowing with a current height of the blade 131.

The moving robot 100 includes a docking insertion 158 which is connected to a docking device 200 when the moving robot 100 docks with the docking device 200. The docking insertion 158 is provided to be recessed to be inserted into the docking connector 210 of the docking device 200. The docking insertion 158 is disposed on the front surface portion of the body 110. The moving robot 100 can be correctly guided when being charged by the connection of the docking insertion 158 and the docking connector 210.

The moving robot 100 may include a charging corresponding terminal 159 disposed at a position contactable with a charging terminal 211 to be described later in a state where the docking insertion 158 is inserted into the docking connector 210. The charging corresponding terminal 159 may include a pair of charging corresponding terminals 159a and 159b disposed at positions corresponding to the pair of charging terminals 211 (211a and 211b). The pair of charging correspondence terminals 159a and 159b may be disposed left and right in a state where the docking insertion portion 158 is interposed therebetween.

A terminal cover (not illustrated) may be provided to cover the docking insertion 158 and the pair of charging terminals 211 (211a, 211b) so as to be opened and closed. When the moving robot 100 travels, the terminal cover may cover the docking insertion 158 and the pair of charging terminals 211 (211a and 211b). When the moving robot 100 is connected to the docking device 200, the terminal cover is opened, and the docking insertion 158 and the pair of charging terminals 211 (211a and 211b) may be exposed.

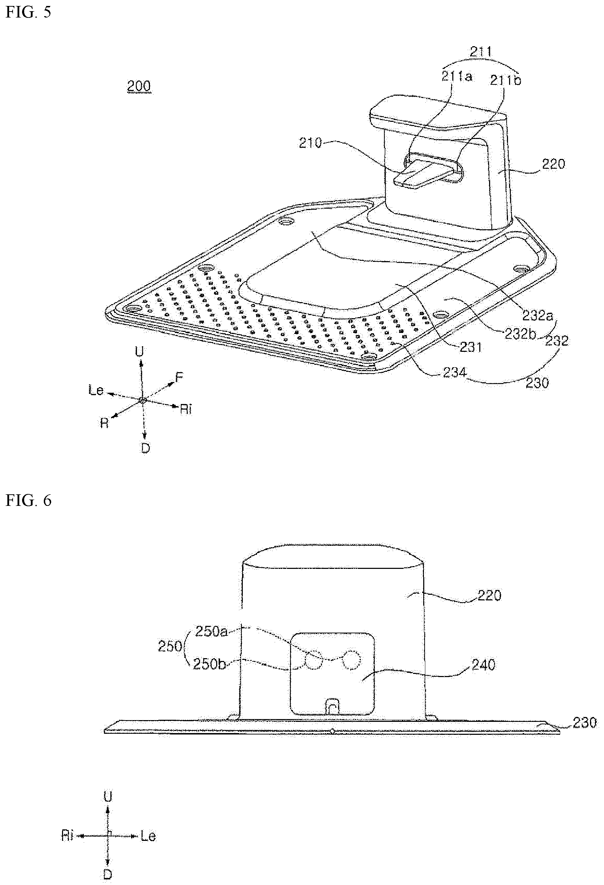

Meanwhile, referring to FIGS. 5 and 6, the docking device 200 includes a docking base 230 disposed on the floor and a docking support 220 protruding upwardly from a front portion of the docking base 230.

The docking base 230 defines a surface parallel in a horizontal direction. The docking base 230 has a plate shape so that the moving robot 100 can be seated. The docking support 220 extends from the docking base 230 in a direction intersecting the horizontal direction.

The moving robot 100 includes the docking connector 210 which is inserted into the docking insertion 158 when the moving robot 100 is charged. The docking connector 210 protrude rearward from the docking support 220.

The docking connector 210 may have a thickness in the up-down direction smaller than a width in the right-left direction. The width of the docking connector 210 in the right-left direction may narrowed rearward. When viewed from above, a shape of the docking connection 210 is trapezoidal in whole. The docking connector 210 is formed in a right and left symmetrical shape. A rear portion of the docking connector 210 forms a free end, and a front portion of the docking connector 210 is fixed to the docking support 220. The rear portion of the docking connector 210 may be formed in a rounded shape.

When the docking connector 210 is completely inserted into the docking insertion 158, the moving robot 100 may be charged by the docking device 200.

The docking device 200 includes the charging terminal 211 for charging the moving robot 100. The charging terminal 211 and the charging corresponding terminal 159 of the moving robot 100 come into contact with each other, and thus, power for charging may be supplied from the docking device 200 to the moving robot 100.

The charging terminal 211 includes a contact surface facing the rear side, and the charging corresponding terminal 159 includes a contact corresponding surface facing the front side. The contact surface of the charging terminal 211 and the contact corresponding surface of the charging corresponding terminal 159 come into contact with each other, and thus, the power of the docking device 200 is connected to the moving robot 100.

The charging terminal 211 may include the pair of charging terminals 211 (211a and 211b) forming positive and negative poles. The first charging terminal 211a is provided to come into contact with the first charging terminal 159a, and the second charging terminal 211b is provided to come into contact with the second charging terminal 159b.

The pair of charging terminals 211a and 211b may be disposed in a state where the docking connector 210 is interposed therebetween. The pair of charging terminals 211a and 211b may be disposed on right and left of the docking connector 210.

The docking base 230 includes a wheel guard 232 on which the driving wheel 121 and the auxiliary wheel 125 of the moving robot 100 ride. The wheel guard 232 includes a first wheel guard 232a which guides a movement of the first auxiliary wheel 125 and a second wheel guard 232b which guides a movement of the second auxiliary wheel 125. An upper convex center base 231 is disposed between the first wheel guard 232a and the second wheel guard 232b. The docking base 230 includes a slip prevention 234 for preventing slipping of the first wheel 121(L) and the second wheel 121(R). The slip prevention 234 may include a plurality of protrusions protruding upward.

Meanwhile, a boundary wire 290 for setting a boundary of a traveling area of the moving robot 100 may be implemented. The boundary wire 290 may generate a predetermined boundary signal. The moving robot 100 may detect a boundary signal and recognize a boundary of the traveling area set by the boundary wire 290.

For example, a predetermined current flows along the boundary wire 290 to generate a magnetic field around the boundary wire 290. Here, the generated magnetic field is a boundary signal. An AC current having a predetermined change pattern may flow through the boundary wire 290 so that the magnetic field generated around the boundary wire 290 may be changed to have a predetermined change pattern. The moving robot 100 can recognize that the moving robot 100 approaches the boundary wire 290 within a predetermined distance using a boundary signal detector 177 which detects the magnetic field, and thus, the moving robot 100 can travel only the traveling area within the boundary set by the boundary wire 290.

The boundary wire 290 may generate a magnetic field in a direction different from a reference wire 270. For example, the boundary wire 290 may be disposed substantially parallel to the horizontal plane. Here, the "substantially parallel" can include parallelism in an engineering sense, including complete parallelism in a mathematical sense and a certain level of error.

The docking device 200 may serve to transmit a predetermined current to the boundary wire 290. The docking device 200 may include a wire terminal 250 connected to the boundary wire 290. Both ends of the boundary wire 290 may be connected to a first wire terminal 250a and a second wire terminal 250b, respectively. When the boundary wire 290 and the wire terminal 250 are connected to each other, the power of the docking device 200 can supply a current to the boundary wire 290.

The wire terminal 250 may be disposed at a front portion F of the docking device 200. That is, the wire terminal 250 may be disposed on a side opposite to a direction in which the docking connector 210 protrudes. The wire terminal 250 may be disposed on the docking support 220. The first wire terminal 250a and the second wire terminal 250b may be disposed spaced apart from side to side.

The docking device 200 may include a wire terminal opening/closing portion 240 which covers the wire terminal 250 so that the wire terminal 250 can be opened or closed. The wire terminal opening/closing portion 240 may be disposed at the front portion F of the docking support 220. The wire terminal opening/closing portion 240 is hinged to the docking support 220 and may be preset to perform an opening/closing operation when the wire terminal opening/closing portion 240 is rotated.

Meanwhile, the reference wire 270 for recognizing the position of the docking device 200 to the moving robot 100 may be implemented. The reference wire 270 may generate a predetermined docking position signal. The moving robot 100 detects the docking position signal, recognizes the position of the docking device 200 by the reference wire 270, and may return to the recognized position of the docking device 200 when a return command or charging is required. The position of the docking device 200 may be a reference point of the traveling of the moving robot 100.

The reference wire 270 is formed of a conductive material through which electricity can flow. The reference wire 270 may be connected to the power supply of the docking device 200 to be described later.

For example, a magnetic field may be generated around the reference wire 270 by causing a predetermined current to flow along the reference wire 270. Here, the generated magnetic field is the docking position signal. By allowing an alternating current having a predetermined change pattern to flow through the reference wire 270, a magnetic field generated around the reference wire 270 may change with a predetermined change pattern. The moving robot 100 can recognize that the moving robot 100 is close to the reference wire 270 within a predetermined distance by using the boundary signal detector 177 which detects the magnetic field, and accordingly, the moving robot 100 can return to the position of the docking device 200 set by the reference wire 270.

The reference wire 270 may generate the magnetic field in a direction distinct from the boundary wire 290. For example, the reference wire 270 may extend in a direction intersecting the horizontal direction. Preferably, the reference wire 270 may extend in the up-down direction orthogonal to the horizontal direction.

The reference wire 270 may be installed on the docking device 200. The reference wire 270 may be disposed at various positions in the docking device 200.

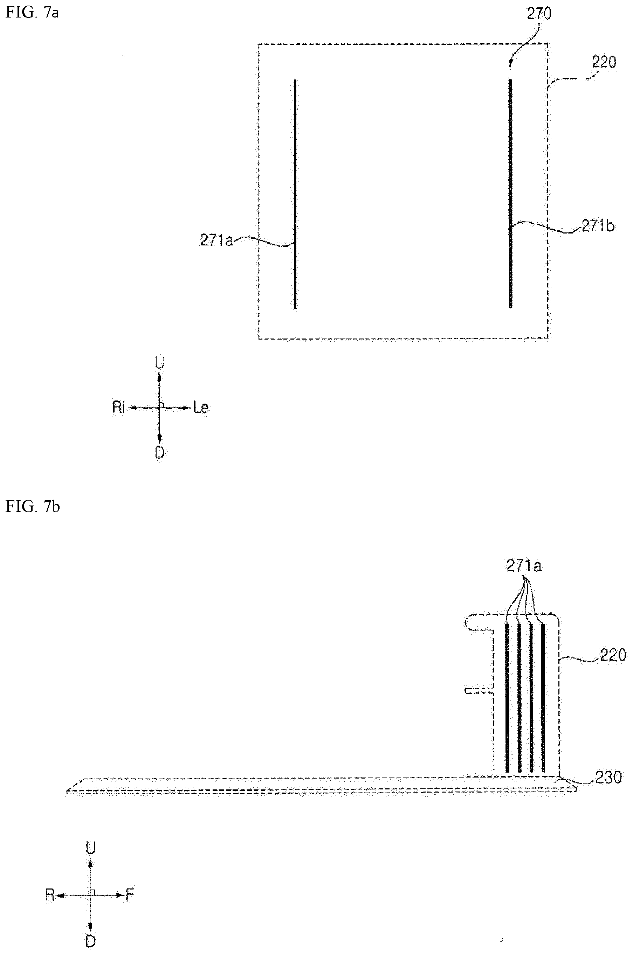

FIG. 7a is a view when the reference wire 270 according to a first embodiment of the present disclosure is viewed from the rear, and FIG. 7b is a view when the reference wire 270 according to the first embodiment of the present disclosure is viewed from one side.

With reference to FIGS. 6, 7a, and 7b, the reference wire 270 according to the first embodiment may be disposed inside the docking support 220. Since the reference wire 270 needs to generate a magnetic field signal in the horizontal direction, the reference wire 270 is disposed to extend in the vertical direction. When the reference wire 270 is disposed on the docking base 230, there is a disadvantage that a thickness of the docking base 230 becomes very thick.

The reference wire 270 may include at least a vertical portion 271 extending in a direction intersecting the horizontal direction. The vertical portion 271 may be disposed substantially in parallel with the up-down direction UD.

A direction of electricity input into the vertical portion 271 of the reference wire 270 may proceed from the top to the bottom or from the bottom to the top.

A plurality of vertical portions 271 may be disposed in order to generate the docking position signal more than a certain level in the entire peripheral area of the docking device 200. For example, the vertical portion 271 may include a first vertical portion 271a and a second vertical portion 271b which is disposed to be spaced apart from the first vertical portion 271a. Of course, the vertical portion 271 may include only one of the first vertical portion 271a and the second vertical portion 271b.

The first vertical portion 271a and the second vertical portion 271b are disposed to be spaced apart in the right-left direction. The first vertical portion 271a may be disposed adjacent to a right end of the docking support 220, and the second vertical portion 271b may be disposed adjacent to a left end of the docking support 220. When the first vertical portion 271a and the second vertical portion 271b are disposed adjacent to both ends of the docking support 220, an area in which the magnetic field is generated by the reference wire 270 is expanded as far as possible around the docking device 200.

The first vertical portion 271a and the second vertical portion 271b may have the same or different directions of current. Preferably, when electricity flows from the top to the bottom in the first vertical portion 271a, electricity may flow in the second vertical portion 271b from the bottom to the top.

In order to reinforce the strength of the electric field of the first vertical portion 271a and the second vertical portion 271b, a plurality of first vertical portions 271a and a plurality of second vertical portions 271b may be provided, respectively. Each of the first vertical portion 271a and the second vertical portion 271b may be an assembly of several wires, and the first vertical portion 271a and the second vertical portion 271b may have a certain arrangement. Of course, one first vertical portion 271a and one second vertical portion 271b may be disposed.

For example, a plurality of first vertical portions 271a may be disposed in a row along a line extending in the front-rear direction, and a plurality of second vertical portions 271b may be disposed in a row along a line extending in the front-rear direction.

When the plurality of first vertical portions 271a and the second vertical portions 271b are disposed at both ends of the docking support 220 in the right-left direction and disposed in rows in the front-rear direction, the charging terminal 211 and the docking connector 210 may be disposed between the plurality of first vertical portions 271a and the second vertical portion 271b. When the charging terminal 211 and the docking connector 210 are disposed between the plurality of first vertical portions 271a and the plurality of second vertical portions 271b, there is an advantage in that the reference wire 270 can be disposed without changing configurations of the charging terminal 211 and the docking connector 210.

The plurality of first vertical portions 271a and the plurality of second vertical portions 271b may be electrically connected to each other or may receive electricity from a separate power source. The docking device 200 may serve to send a predetermined current to the reference wire 270. The docking device 200 may include the wire terminal 250 connected to the reference wire 270. Both ends of the reference wire 270 may be connected to the first wire terminal 250a and the second wire terminal 250b, respectively. Through the connection between the reference wire 270 and the wire terminal 250, the power of the docking device 200 may supply current to the reference wire 270.

Specifically, both ends of the plurality of first vertical portions 271a may be connected to the first wire terminal 250a and the second wire terminal 250b, respectively, and both ends of the plurality of second vertical portions 271b may be connected to the first wire terminal 250a and the second wire terminal 250b, respectively.

Of course, the reference wire 270 according to another example may further include a horizontal portion (not illustrated). In this case, the reference wire 270 may have a structure in which the first vertical portion 271a and the second vertical portion 271b are connected to each other to receive power from one power source.

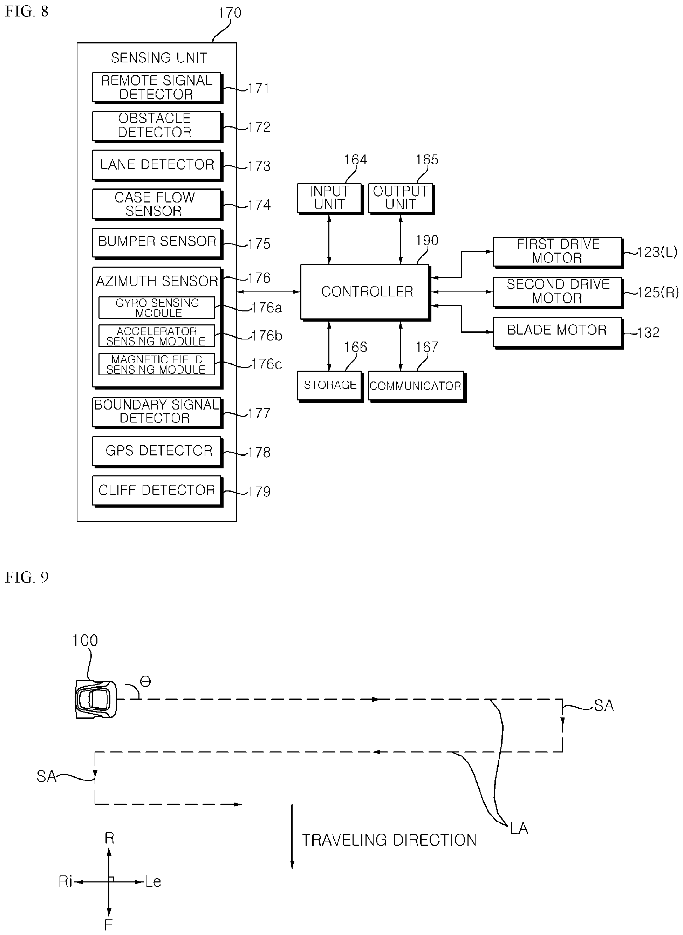

FIG. 8 is a block diagram illustrating a control relationship of the moving robot 100 of FIG. 1.

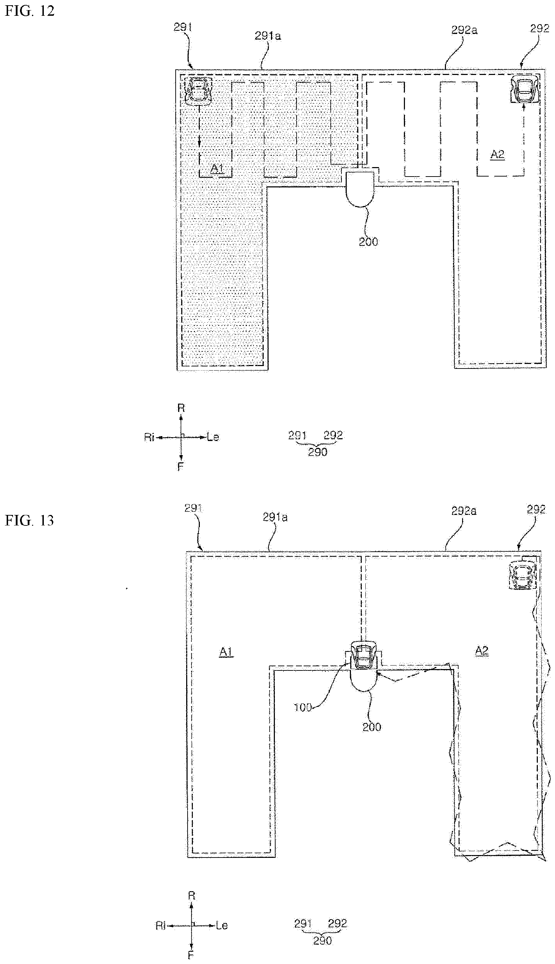

Meanwhile, referring to FIG. 13, the moving robot 100 may include the input unit 164 capable of inputting various instructions of the user. The input unit 164 may include a button, a dial, and a touch-type display. The input unit 164 may include a microphone (not illustrated) for speech recognition. In the present embodiment, a plurality of buttons are disposed on an upper portion of the case 112.

The moving robot 100 may include the output unit 165 which outputs various information to the user. The output unit 165 may include a display module which outputs visual information. The output unit 165 may include a speaker (not illustrated) which outputs auditory information.

In the present embodiment, the display module 165 outputs an image upward. The display module 165 is disposed on the upper portion of the case 112. As an example, the display module 165 may include a thin film transistor liquid-crystal display (LCD) panel. In addition, the display module 165 may be implemented using various display panels such as a plasma display panel or an organic light emitting diode display panel.

The moving robot 100 includes a storage 166 for storing various information. The storage 166 records various information necessary for the control of the moving robot 100, and may include a volatile or nonvolatile recording medium. The storage 166 may store information input from the input unit 164 or received by a communicator 167. A program for controlling the moving robot 100 may be stored in the storage 166.

The moving robot 100 may include the communicator 167 for communicating with an external device (terminal or the like), a server, a router, or the like. For example, the communicator 167 may be implemented to wirelessly communicate with wireless communication technologies such as IEEE 802.11 WLAN, IEEE 802.15 WPAN, UWB, Wi-Fi, Zigbee, Z-wave, and Blue-Tooth. The communicator may be changed depending on the communication method of another device or a server.

The moving robot 100 includes a sensing unit 170 which senses information related to a state of the moving robot 100 or an environment outside the moving robot 100. The sensing unit 170 may be include at least one of a remote signal detector 171, an obstacle detector 172, a rain detector 173, a case movement sensor 174, a bumper sensor 175, azimuth sensor 176, boundary signal detector 177, a GPS detector 178, and a cliff detector 179.

The remote signal detector 171 receives an external remote signal. When the remote signal is transmitted by an external remote controller, the remote signal detection unit 171 may receive the remote signal. For example, the remote signal may be an infrared signal. The signal received by the remote signal detector 171 may be processed by the controller 190.

A plurality of remote signal detector 171 may be provided. The plurality of remote signal detectors 171 include a first remote signal detection unit 171a disposed on the front portion of the body 110 and a second remote signal detection unit 171b disposed on the rear portion of the body 110. The first remote signal detector 171a receives a remote signal transmitted from the front. The second remote signal detector 171b receives a remote signal transmitted from the rear.

The obstacle detector 172 detects an obstacle around the moving robot 100. The obstacle detector 172 may detect an obstacle in front. A plurality of obstacle detectors 172a, 172b, and 172c may be provided. The obstacle detector 172 is disposed on the front surface of the body 110. The obstacle detector 172 is disposed above the frame 111. The obstacle detector 172 may include an infrared sensor, an ultrasonic sensor, an RF sensor, a geomagnetic sensor, a Position Sensitive Device (PSD) sensor, or the like.

The rain detector 173 detects rain when rain occurs in an environment where the moving robot 100 is placed. The rain detector 173 may be disposed in the case 112.

The case movement sensor 174 detects the movement of the case connector. When the case 112 is raised upward with respect to the frame 111, the case connector moves upward, and the case movement sensor 174 detects that the case 112 is raised. When the case movement sensor 174 detects that the case 112 is raised, the controller 190 may control to stop the operation of the blade 131. For example, when the user raises the case 112 or a situation in which the case 112 is raised by a lower obstacle having a significant size occurs, the case movement sensor 174 may detect this.

The bumper sensor 175 can detect a rotation of the movable fixing portion. For example, a magnet may be disposed on one side of the lower portion of the movable fixing portion, and a sensor which detects a change in the magnetic field of the magnet may be disposed on the frame 111. When the movable fixing portion rotates, the sensor detects the change in the magnetic field of the magnet, and thus, the bumper sensor 175 which detects the rotation of the movable fixing portion can be implemented. When the bumper 112b collides with an external obstacle, the movable fixing portion rotates integrally with the bumper 112b. The bumper sensor 175 may detect the rotation of the movable fixing portion, and thus, detect an impact of the bumper 112b.

The sensing unit 20 includes a slope information acquirer 180 which acquires slope information on a slope of the traveling surface S. The slope information acquirer180 may acquire slope information on the slope of the traveling surface S on which the body 110 is mounted by sensing the slope of the body 110. For example, the slope information acquirer 80 may include a gyro sensing module 176a. The slope information acquirer 180 may include a processing module (not illustrated) for converting a detection signal of the gyro sensing module 176a into slope information. The processing module is a portion of the controller 190 and may be implemented as an algorithm or program. As another example, the slope information acquirer180 may include the magnetic field sensing module 176c to obtain the slope information based on sensing information on a magnetic field of the Earth.

A gyro sensing module 176a may acquire information on a rotational angular velocity with respect to a horizontal surface of the body 30. Specifically, the gyro sensing module 176a may detect the rotational angular speed about X and Y axes which are parallel to the horizontal surface and are perpendicular to each other. The rotational angular velocity about the horizontal surface can be calculated by synthesizing the rotational angular velocity (roll) about the X axis and the rotational angular velocity (pitch) about the Y axis through a processing module. The rotational angular velocity can be integrated through the processing module to calculate a slope value.

The gyro sensing module 176a may detect a predetermined reference direction. The slope information acquirer 180 may acquire slope information based on the reference direction.

The azimuth sensor (AHRS) 176 may have a gyro sensing function. The azimuth sensor 176 may further include an acceleration sensing function. The azimuth sensor 176 may further include a magnetic field sensing function.

The azimuth sensor 176 may include a gyro sensing module 176a which performs gyro sensing. The gyro sensing module 176a may detect the horizontal rotational speed of the body 110. The gyro sensing module 176a may detect a tilting speed with respect to the horizontal surface of the body 110.

The gyro sensing module 176a may include a gyro sensing function for three axes of a spatial coordinate system orthogonal to each other. The information collected by the gyro sensing module 176a may be roll, pitch, and yaw information. The processing module can calculate direction angles of the cleaners 1 and 1' by integrating the angular velocities of rolling, pitching, and yaw.

The azimuth sensor 176 may include an acceleration sensing module 176b which performs acceleration sensing. The acceleration sensing module 176b may have an acceleration sensing function for the three axes of the spatial coordinate system orthogonal to each other. A given processing module can calculate the speed by integrating the acceleration, and can calculate a moving distance by integrating the speed.

The azimuth sensor 176 may include a magnetic field sensing module 176c which performs magnetic field sensing. The magnetic field sensing module 176c may have a magnetic field sensing function for three axes of a spatial coordinate system orthogonal to each other. The magnetic field sensing module 176c may detect the magnetic field of the Earth.

The boundary signal detector 177 detects the boundary signal of the boundary wire 290 or/and the docking position signal of the reference wire 270.

The boundary signal detector 177 may be disposed in the front portion of the body 110. Accordingly, it is possible to detect the boundary of the traveling area early while moving forward, which is a main traveling direction of the moving robot 100. The boundary signal detector 177 may be disposed in an inner space of the bumper 112b.

The boundary signal detector 177 may include a first boundary signal detector 177a and a second boundary signal detector 177b which are spaced apart from side to side. The first boundary signal detector 177a and the second boundary signal detector 177b may be disposed in the front portion of the body 110.

For example, the boundary signal detector 177 includes a magnetic field sensor. The boundary signal detector 177 may be implemented using a coil to detect a change in a magnetic field. The boundary signal detector 177 may detect a magnetic field in at least a horizontal direction. The boundary signal detector 177 may detect a magnetic field with respect to three axes which are orthogonal to each other in space.

Specifically, the first boundary signal detector 177a may detect a magnetic field signal in a direction orthogonal to the second boundary signal detector 177b. The first boundary signal detector 177a and the second boundary signal detector 177b may detect magnetic field signals in directions orthogonal to each other, and combine the detected magnetic field signal values to detect the magnetic field with respect to the three axes orthogonal to each other in the space.

When the boundary signal detector 177 detects the magnetic field with respect to the three axes which are orthogonal to each other in space, the direction of the magnetic field is determined by a sum vector value of the three axes, and if the direction of the magnetic field is close to the horizontal direction, the docking position signal can be recognized, and if the direction of the magnetic field is close to the vertical direction, the boundary signal can be recognized.

Further, the boundary signal detector 177 may distinguish between an adjacent boundary signal and boundary signals of a first traveling area A1 and a second traveling area A2 by a difference in an intensity of the magnetic field, and may distinguish the adjacent boundary signal and the docking position signal by a difference in direction of the magnetic field. Specifically, when at least some or all of a first boundary wire 291 of the first traveling area A1 and a second boundary wire 292 of the second traveling area A2 overlap each other, and current is applied in the same direction, a magnetic field having a greater intensity than the magnetic field generated in each of the first boundary wire 291 and the second boundary wire 292 is generated, and each signal can be distinguished by a difference in intensity of the magnetic field.

As another example, the boundary signal detector 177 may distinguish between the adjacent boundary signal and the boundary signals of the first traveling area A1 and the second traveling area A2 by a difference in a magnetic field distribution. Specifically, when a portion of the first boundary wire 291 of the first traveling area A1 and the second boundary wire 292 of the second traveling area A2 are disposed within a certain distance and the current is applied in the same direction or different directions, the boundary signal detector 177 may detect that the intensity of the magnetic field has a plurality of peaks within a predetermined distance on plane coordinates and recognize the signal as the adjacent boundary signal.

The GPS detector 178 may be provided to detect a Global Positioning System (GPS) signal. The GPS detector 178 may be implemented using a PCB.

The cliff detection unit 179 detects the presence of a cliff on the traveling surface. The cliff detection unit 179 is disposed in the front portion of the body 110 and can detect the presence or absence of a cliff in front of the moving robot 100.

The sensing unit 170 may include an opening/closing detector (not illustrated) which detects whether at least one of the first opening/closing unit 117 and the second opening/closing unit 118 is opened or closed. The opening/closing detector may be disposed in the case 112.

The moving robot 100 includes the controller 190 which controls autonomous traveling. The controller 190 may process a signal of the sensing unit 170. The controller 190 can process a signal of the input unit 164.

The controller 190 may control the driving of the first driving motor 123(L) and the second driving motor 123(R). The controller 190 may control the driving of the blade motor 132. The controller 190 can control the output of the output unit 165.

The controller 190 includes a main board (not illustrated) disposed in the inner space of the body 110. The main board means a PCB.

The controller 190 may control the autonomous driving of the moving robot 100. The controller 190 may control the driving of the traveler 120 based on the signal received from the input unit 164. The controller 190 may control the driving of the traveler 120 based on the signal received from the sensing unit 170.

In addition, the controller 190 may process the signal of the boundary signal detector 177. Specifically, when the boundary signal detector 177 detects the docking position signal, the controller 190 may set the position at which the docking position signal is detected as the reference point. When a command to return to the reference point determined by the docking position signal is input, the controller 190 may cause the moving robot 100 to travel the reference point.

In addition, when the boundary signal detector 177 detects the boundary signal, the controller 190 may set the position at which the boundary signal is detected as the boundary of the traveling area. The controller 190 can travel the moving robot 100 within the boundary of the traveling area.

Hereinafter, pattern traveling and a direction angle used in the present specification will be defined.

FIG. 9 is a view illustrating a pattern traveling of the moving robot according to an embodiment of the present disclosure.

Referring to FIG. 9, the pattern traveling may mean that traveling is repeated in which the moving robot 100 linearly travels along a set major axis LA, changes a traveling direction to a direction intersecting the major axis LA at one end of the major axis LA, linearly travels a minor axis SA set shorter than the major axis LA, changes the traveling direction to the direction intersecting the minor axis SA at one end of the minor axis SA, and travels by the set major axis LA. Here, it is preferable that an angle between the major axis LA and the minor axis SA is 88° to 92°. It is preferable that a plurality of long axes LA are parallel to each other, and a plurality of short axes SA are parallel to each other. Of course, the major axis LA and the minor axis SA do not mean a straight line in a mathematical sense, but a concept including a curve close to a straight line.

Moreover, the pattern traveling may mean that traveling is repeated in which when the moving robot 100 linearly travels along the set major axis LA until the obstacle emerges or the moving robot 100 meets the boundary of the traveling area and the moving robot 100 meets the obstacle or the boundary of the traveling area, changes the traveling direction to the direction intersecting the major axis LA to linearly travel along the minor axis SA set to be shorter than the major axis LA, and changes the traveling direction to the direction intersecting the minor axis SA by about 90° at one end of the minor axis SA to travel along the set major axis LA until the obstacle emerges or the moving robot meets the obstacle.

Here, the direction of the minor axis SA is the traveling direction, and the direction of the major axis LA becomes a direction angle (θ1) direction of the pattern traveling. Here, lengths of the major axis LA and the minor axis SA are not limited. However, preferably, the length of the major axis LA is set to 20 to 30 meters, and the length of the minor axis SA is set to 0.5 times to 2 times the length of the body.

Here, the direction angle means an angle formed by the major axis LA and a reference line ST. The direction angle is measured clockwise from the reference line ST. Here, the reference line ST and a measurement direction may be changed. For example, in FIG. 9, the direction angle of the pattern traveling is 90°, and the traveling direction is from the rear to the front. The direction angle of the traveling direction is 180°.

The direction angle and a progress direction angle may be calculated as a sensing value of the azimuth sensor 176, and a movement distance of the moving robot may be calculated as a sensing value of the azimuth sensor 176 and the GPS detector 178.

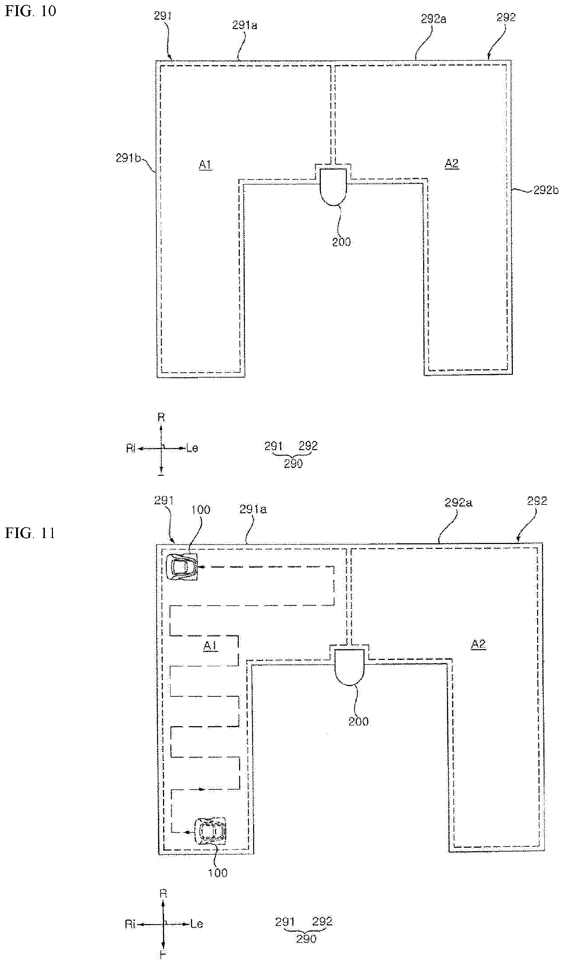

FIG. 10 illustrates the traveling area including the traveling area defined by the wire, the first traveling area A1, and the second traveling area A2.

The moving robot maps the traveling area when traveling along the boundary signal of the wire. The controller 190 may define the traveling area based on the boundary signal and may divide the traveling area into a plurality of traveling areas including at least the first traveling area A1 and the second traveling area A2. Here, as a method of dividing the traveling area into the plurality of traveling areas, various methods may be used.

For example, as illustrated in FIG. 10, the traveling area may be divided into the first traveling area A1 and the second traveling area A2. Here, the boundary wire 290 may include a first boundary wire 291 defining a portion of the boundary of the first traveling area A1 and a second boundary wire 292 defining a portion of the boundary of the first traveling area A1.

FIG. 11 is a view illustrating the moving robot performing first pattern traveling in the first traveling area A1.

Referring to FIG. 11, the controller 190 controls the traveler so that the moving robot perform the first pattern traveling in the first traveling area A1 at the first direction angle. Specifically, the controller 190 controls the moving robot so that the moving robot moves from the charging station to a traveling starting point of the first traveling area A1 along the boundary wire 290. Here, the traveling starting point of the first traveling area A1 is a position in which a curvature value of the wire is equal to or less than a preset value and efficient pattern traveling is possible considering the shape of the first traveling area A1. More specifically, in the present disclosure, the traveling starting point of the first traveling area A1 may be a center of a lower end portion 291c of the boundary wire 290 which is located at a lower end of the first traveling area A1 and is disposed parallel to the right-left direction.

The controller 190 defines that the moving robot performs the first pattern traveling from the traveling starting point of the first traveling area (A1) at the first direction angle. Specifically, the first direction angle of the first pattern traveling may be 88° to 92°, and the progress direction angle of the first pattern traveling may be 358° to 2°. The moving robot may perform the pattern traveling in the first traveling area A1 in a state where the right-left direction is set to the major axis LA and the up-down direction is set to the minor axis SA direction.

For efficient pattern traveling, the first direction angle can be calculated parallel to the boundary of the traveling area adjacent to the traveling starting point of the first pattern traveling. Specifically, the controller 190 may calculate the first direction angle parallel to the lower end portion 291c of the boundary wire 290.

When the controller 190 completes the traveling of the first traveling area A1, the controller 190 may control the traveler to perform a second pattern traveling. Here, completion of the traveling of the first traveling area A1 means that a total movement distance of the moving robot in the traveling direction reaches a preset value, or the boundary of the first traveling area A1 is adjacent in front of the moving robot in the traveling direction.

Specifically, as illustrated in FIG. 11, when the moving robot moves in the minor axis SA direction, in a case where the moving robot is within a certain distance from the upper end portion 291a of the boundary wire of the first traveling area A1, the controller 190 may determine that the traveling of the first traveling area A1 has been completed.

Referring to FIG. 12, after the moving robot completes the traveling in the first traveling area A1, he controller 190 controls the traveler so that the moving robot performs the second pattern traveling at a second direction angle intersecting the first direction angle.

Specifically, the controller 190 may control the traveler so that the moving robot starts the second pattern traveling at a site where the moving robot completes the first traveling area A1. That is, when the moving robot determines that the traveling in the first traveling area A1 has been completed, the moving robot does not move any more, matches the direction angle with the second direction angle while rotating in place, and starts the second pattern traveling.

The controller 190 may randomly calculate the second direction angle of the second pattern traveling in the direction intersecting the first direction angle. For example, the angle between the first direction angle and the second direction angle may be 88° to 92°. Preferably, the angle between the first direction angle and the second direction angle may be 90°. More specifically, the controller 190 may calculate one value, which is randomly selected from values having angles 85° to 95° with respect to the first direction angle, as the second direction angle.

Specifically, the second direction angle of the second pattern traveling may be 358° to 2°, and the progress direction angle of the second pattern traveling may be 88° to 92°. The moving robot may perform the pattern traveling in a state where the up-down direction is set to the major axis LA direction and the right-left direction is set to the minor axis SA direction.

For efficient pattern traveling, the second direction angle may be calculated parallel to the boundary of the traveling area adjacent to the traveling starting point of the second pattern traveling. Specifically, the controller 190 may calculate a second direction angle parallel to the left end portion 291b of the boundary wire 290.

The traveling direction of the second pattern traveling is not limited. However, preferably, the direction is a direction in which the moving robot moves in the second traveling area A2 direction which is the next target after being out of the first traveling area A1 in which the traveling is completed. For example, the traveling direction of the second pattern traveling may be a direction away from the boundary of the traveling area adjacent to the end point of the first pattern traveling or a direction away from the first traveling area A1.

As another example, as the traveling direction of the second pattern traveling, a direction from a virtual line connecting the center of the second traveling area A2 at the end point of the first pattern traveling toward the center of the second traveling area A2 may be selected. Alternatively, as the traveling direction of the second pattern traveling, a direction having an acute angle within 20° between a virtual line connecting the center of the second traveling area A2 at the end point of the first pattern traveling and a direction toward the center of the second traveling area A2 may be selected.

Therefore, the moving robot can continuously perform the work without returning to the charging station again after completing the work in the first traveling area A1, thereby improving the user's sense of trust. Moreover, since the moving robot does not frequently return to the charging station for accurate location recognition on the map, there is an advantage of preventing damages around the wire moving to the charging station.

When the moving robot switches direction angle and continues to travel, the moving will travel the entirety or a portion of the second traveling area A2.

Therefore, it is possible to solve a problem in U.S. Patent Application Publication No. 20180064024, which is the related art, in that if the work is performed in a state where the traveling area is divided into a plurality of areas based on the vertices of the traveling area, an effective and uniform work cannot be performed.

Hereinafter, the homing traveling will be described with reference to FIG. 13.

The homing traveling means traveling in which the moving robot 100 returns to the docking device 200. When the controller 190 receives a homing signal, the controller 190 may perform the homing traveling.

The controller 190 may control the traveler so that the moving robot returns to the docking device when a preset time elapses after the moving robot starts first pattern traveling. After the moving robot starts traveling, an operating time calculated by consumption of the battery is set, and when the set time has elapsed, the moving robot may return to the docking device and may be charged.

Of course, if the controller 190 determines that the remaining battery power is insufficient while the moving robot performs the pattern traveling, the controller 190 may control the traveler so that the moving robot returns to the docking device.

The controller 190 defines the boundary line 290 which becomes the reference line on which the moving robot 100 will travel through the distribution of the magnetic field, which is the boundary signal input from the boundary signal detector 177. In addition, in the specification, the moving robot 100 traveling along the boundary signal means that the moving robot 100 travels along the boundary line 290.

When the moving robot 100 repeatedly travels along the boundary line 290 during the homing traveling, a problem occurs in that the ground is dug due to the repeated traveling, and thus, the moving robot 100 may travel a random traveling path while traveling along the boundary line 290.

Specifically, during homing traveling, the controller 190 may control the traveler so that the body changes the traveling direction by the random number of times within a homing traveling area set with the boundary line 290 as a central axis. Here, the homing traveling area may be defined as a closed area having the boundary line 290 as a central axis. More specifically, in the homing traveling area, a first homing boundary line (not illustrated) and a second homing boundary line (not illustrated) parallel to the boundary line 290 are defined with the boundary line 290 interposed therebetween, and the homing traveling area as an area between the first homing boundary line and the second homing boundary line.

Since the moving robot 100 is moved while changing the direction by the random number of times within the homing traveling area, a possibility of damage to the ground during the homing traveling is reduced.

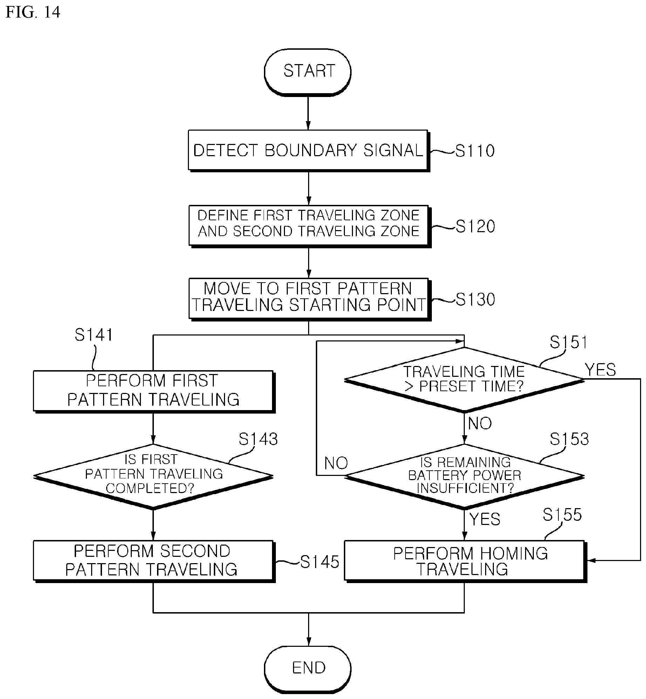

Hereinafter, a control method of the moving robot according to an embodiment of the present disclosure will be described with reference to FIG. 14. The control method may be performed only by the controller 190 or may be performed by the controller 190 and a terminal or a server according to an embodiment. The present disclosure may be a computer program which implements each step of the control method, or may be a recording medium in which a program for implementing the control method is recorded. The "recording medium" means a computer-readable recording medium. The present disclosure can also be a system which includes both hardware and software.

In some embodiments, it is also possible for functions mentioned in the steps to occur out of order. For example, two steps illustrated in succession may in fact be performed substantially simultaneously, or the steps may sometimes be performed in the reverse order depending on the corresponding function.

First, the control method of the moving robot 100 according to the embodiment of the present disclosure detects the boundary signal. The moving robot 100 includes a division step of defining the traveling area based on the boundary signal and dividing the traveling area into at least the first traveling area A1 and the second traveling area A2, a first pattern traveling step of the moving robot performing the first pattern traveling in the first traveling area A1 at the first direction angle, and a second pattern traveling step of the moving robot performing the second pattern traveling at the second direction angle interesting the first direction angle after completing the first pattern traveling.

In the division step, the moving robot travels while detecting the boundary signal (S 110). The moving robot defines the traveling area based on the boundary signal, and divides the traveling area into at least the first traveling area A1 and the second traveling area A2 (S120).

After the division step, the moving robot moves from the docking device to the starting point of the first pattern traveling along the boundary of the traveling area (S130).

The moving robot performs the first pattern traveling at the first direction angle in the first traveling area A1 at the first pattern traveling starting point (S141).

The moving robot determines whether or not the first pattern traveling has been completed in the first traveling area (A1) (S143), and if it is determined that the first pattern traveling has been completed, the moving robot performs the second pattern traveling at the second direction angle intersecting the first direction angle (S145).

Of course, when the moving robot receives a homing command from the user at the same time as or at a time different from the first pattern traveling and the second pattern traveling, a traveling time exceeds the preset time (S151), or it is determined that power in the battery of the moving robot 100 is insufficient, the moving robot starts a homing traveling mode.

In the homing traveling mode, when the boundary signal is detected, the moving robot 100 travels along the boundary signal (S155).

## Claims

1. A moving robot (100) comprising:
a body (110) ;
a traveler (120) for moving the body (110);
a boundary signal detector (177) configured to detect a boundary signal generated in a boundary of a traveling area (A1, A2);
an azimuth sensor (176) configured to calculate a direction angle of the body (110); and
a controller (190) configured to define the traveling area (A1, A2) based on the boundary signal and configured to divide the traveling area (A1, A2) into a plurality of traveling areas (A1, A2) including at least a first traveling area (A1) and a second traveling area (A2),
wherein the controller (190) is configured:
to control the traveler (120) so that the moving robot (100) performs a pattern traveling comprising:
in the first traveling area (A1) a first pattern traveling comprising traveling along a major axis (LA) of the first pattern traveling and traveling along a minor axis (SA) of the first pattern traveling intersecting the major axis (LA) of the first pattern traveling and enclosing a first direction angle with the major axis (LA) of the first pattern traveling and
in the second traveling area (A2) a second pattern traveling comprising traveling along a major axis (LA) of the second pattern traveling and traveling along a minor axis (SA) of the second pattern traveling intersecting the major axis (LA) of the second pattern traveling and enclosing a second direction angle with the major axis (LA) of the second pattern traveling,
**characterised in that** the controller (190) is further configured:
to control the traveler (120) to complete the first pattern traveling and to match the direction angle with the second direction angle by rotating the moving robot in place;
to control the traveler (120) to start the second pattern traveling; and
to calculate one value, which is randomly selected from values having angles of 85° to 95° with respect to the first direction angle, as the second direction angle.

2. The moving robot (100) of claim 1, wherein an angle between the major axis (LA) and the minor axis (SA) of the second pattern traveling is 88° to 92°.

3. The moving robot (100) of claim 1, wherein the controller (190) is configured to randomly calculate the second direction angle.

4. The moving robot (100) of claim 1, wherein the controller (190) is configured to control the traveler (120) so that the moving robot (100) starts performing the second pattern traveling at a position where the moving robot (100) completes the first pattern traveling.

5. The moving robot (100) of claim 1, wherein the according major axis (LA) and/or the according minor axis (SA) is parallel to a portion of the boundary of the according traveling area (A1, A2).

6. The moving robot (100) of claim 1, wherein the boundary signal detector (177) is configured to detect a docking position signal generated in a docking device (200), and
the controller (190) is configured to control the traveler (120) so that the moving robot (100) returns to the docking device (200) when a preset time elapses after the moving robot (100) starts the first pattern traveling; and/or
wherein the boundary signal detector (177) is configured to detect a docking position signal generated in the docking device (200), and
the controller (190) is configured to control the traveler (120) so that the moving robot (100) returns to the docking device (200) when the controller (190) determines that remaining battery power is insufficient while the moving robot (100) performs the pattern traveling.

7. The moving robot (100) of claim 6, wherein the boundary signal detector (177) is configured to distinguish between the docking position signal and the boundary signal by a difference in a direction of a magnetic field.

8. The moving robot (100) of claim 1, wherein a traveling direction being the direction of the minor axis of the second pattern traveling is a direction away from a portion of the boundary of the second traveling area (A2).

9. The moving robot (100) of claim 1, wherein a traveling direction being the direction of the minor axis of the second pattern traveling is a direction away from the first traveling area (A1).

10. The moving robot (100) of claim 1, wherein the boundary signal detector (177) includes a magnetic field sensor.

11. A control method of a moving robot (100), comprising:
a division step of defining (S120) a traveling area based on a boundary signal and dividing the traveling area into at least a first traveling area (A1) and a second traveling area (A2);
a first pattern traveling step of a moving robot (100) performing (S141) a first pattern traveling in the first traveling area (A1) comprising traveling along a major axis (LA) of the first pattern traveling and traveling along a minor axis (SA) of the first pattern traveling, wherein the minor axis (SA) of the first pattern traveling intersects the major axis (LA) of the first pattern traveling at a first direction angle;
a second pattern traveling step of the moving robot (100) performing (S145) a second pattern traveling in the second traveling area (A2) comprising traveling along a major axis (LA) of the second pattern traveling and traveling along a minor axis (SA) of the second pattern traveling, wherein the minor axis (SA) of the second pattern traveling intersects the major axis (LA) of the second pattern traveling at a second direction angle; **characterised by**:
completing the first pattern traveling;
matching a direction angle of the moving robot with the second direction angle by rotating the moving robot in place;
starting the second pattern traveling; and
calculating one value, which is randomly selected from values having angles of 85° to 95° with respect to the first direction angle, as the second direction angle.

12. The control method of a moving robot (100) of claim 11, further comprising:
a movement step of the moving robot (100) moving (S130) to a starting point of the first pattern traveling along a boundary of the traveling area from a docking device (200) before the first pattern traveling step.

13. The control method of a moving robot (100) of claim 11, further comprising:
a homing step of the moving robot (100) returning (S155) to a docking device (200) when a preset time elapses (S151) after the moving robot (100) starts the first pattern traveling.

14. The control method of a moving robot (100) of claim 11, further comprising:
a homing step of the moving robot (100) returning (S155) to a docking device (200) when the moving robot (100) determines (S153) that remaining battery power is insufficient while the moving robot (100) performs the pattern traveling.

## Patentansprüche

1. Sich bewegender Roboter (100), der Folgendes umfasst:
einen Körper (110);
einen Läufer (120) zum Bewegen des Körpers (110);
einen Grenzsignaldetektor (177), der konfiguriert ist, ein Grenzsignal zu detektieren, das an einer Grenze eines Fahrbereichs (A1, A2) erzeugt wird;
einen Azimutsensor (176), der konfiguriert ist, einen Richtungswinkel des Körpers (110) zu berechnen; und
eine Steuereinrichtung (190), die konfiguriert ist, den Fahrbereich (A1, A2) basierend auf dem Grenzsignal zu definieren, und konfiguriert ist, den Fahrbereich (A1, A2) in mehrere Fahrbereiche (A1, A2) aufzuteilen, die zumindest einen ersten Fahrbereich (A1) und einen zweiten Fahrbereich (A2) enthalten,
wobei die Steuereinrichtung (190) konfiguriert ist:
den Läufer (120) derart zu steuern, dass der sich bewegende Roboter (100) eine Musterfahrt durchführt, die Folgendes umfasst:
eine erste Musterfahrt, die das Fahren entlang einer Hauptachse (LA) der ersten Musterfahrt und das Fahren entlang einer Nebenachse (SA) der ersten Musterfahrt, die die Hauptachse (LA) der ersten Musterfahrt schneidet und einen ersten Richtungswinkel mit der Hauptachse (LA) der ersten Musterfahrt einschließt, umfasst, in dem ersten Fahrbereich (A1), und
eine zweite Musterfahrt, die das Fahren entlang einer Hauptachse (LA) der zweiten Musterfahrt und das Fahren entlang einer Nebenachse (SA) der zweiten Musterfahrt, die die Hauptachse (LA) der zweiten Musterfahrt schneidet und einen zweiten Richtungswinkel mit der Hauptachse (LA) der zweiten Musterfahrt einschließt, umfasst, in dem zweiten Fahrbereich (A2),
**dadurch gekennzeichnet, dass** die Steuereinrichtung (190) ferner konfiguriert ist:
den Läufer (120) zu steuern, die erste Musterfahrt abzuschließen und den Richtungswinkel mit dem zweiten Richtungswinkel durch Drehen des sich bewegenden Roboters an Ort und Stelle abzugleichen;
den Läufer (120) zu steuern, die zweite Musterfahrt zu beginnen; und
einen Wert, der aus den Werten, die Winkel zwischen 85° und 95° bezüglich des ersten Richtungswinkels aufweisen, zufällig ausgewählt wird, als den zweiten Richtungswinkel zu berechnen.

2. Sich bewegender Roboter (100) nach Anspruch 1, wobei ein Winkel zwischen der Hauptachse (LA) und der Nebenachse (SA) der zweiten Musterfahrt 88° bis 92° ist.

3. Sich bewegender Roboter (100) nach Anspruch 1, wobei die Steuereinrichtung (190) konfiguriert ist, den zweiten Richtungswinkel zufällig zu berechnen.

4. Sich bewegender Roboter (100) nach Anspruch 1, wobei die Steuereinrichtung (190) konfiguriert ist, den Läufer (120) derart zu steuern, dass der sich bewegende Roboter (100) beginnt, die zweite Musterfahrt an einer Position, an der der sich bewegende Roboter (100) die erste Musterfahrt abschließt, durchzuführen.

5. Sich bewegender Roboter (100) nach Anspruch 1, wobei die entsprechende Hauptachse (LA) und/oder die entsprechende Nebenachse (SA) parallel zu einem Abschnitt der Grenze des entsprechenden Fahrbereichs (A1, A2) ist.

6. Sich bewegender Roboter (100) nach Anspruch 1, wobei der Grenzsignaldetektor (177) konfiguriert ist, ein Andockpositionssignal zu detektieren, das in einer Andockvorrichtung (200) erzeugt wird, und
die Steuereinrichtung (190) konfiguriert ist, den Läufer (120) derart zu steuern, dass der sich bewegende Roboter (100) zu der Andockvorrichtung (200) zurückkehrt, wenn eine voreingestellte Zeit verstreicht, nachdem der sich bewegende Roboter (100) die erste Musterfahrt beginnt; und/oder
wobei der Grenzsignaldetektor (177) konfiguriert ist, ein Andockpositionssignal zu detektieren, das in der Andockvorrichtung (200) erzeugt wird, und
die Steuereinrichtung (190) konfiguriert ist, den Läufer (120) derart zu steuern, dass der sich bewegende Roboter (100) zu der Andockvorrichtung (200) zurückkehrt, wenn die Steuereinrichtung (190) bestimmt, dass die verbleibende Batterieleistung nicht ausreicht, während der sich bewegende Roboter (100) die Musterfahrt durchführt.

7. Sich bewegender Roboter (100) nach Anspruch 6, wobei der Grenzsignaldetektor (177) konfiguriert ist, durch einen Unterschied in der Richtung eines Magnetfelds zwischen dem Andockpositionssignal und dem Grenzsignal zu unterscheiden.

8. Sich bewegender Roboter (100) nach Anspruch 1, wobei eine Fahrrichtung, die die Richtung der Nebenachse der zweiten Musterfahrt ist, eine Richtung weg von einem Abschnitt der Grenze des zweiten Fahrbereichs (A2) ist.

9. Sich bewegender Roboter (100) nach Anspruch 1, wobei eine Fahrrichtung, die die Richtung der Nebenachse der zweiten Musterfahrt ist, eine Richtung weg von dem ersten Fahrbereich (A1) ist.

10. Sich bewegender Roboter (100) nach Anspruch 1, wobei der Grenzsignaldetektor (177) einen Magnetfeldsensor enthält.

11. Verfahren zur Steuerung eines sich bewegenden Roboters (100), das Folgendes umfasst:
einen Teilungsschritt des Definierens (S 120) eines Fahrbereichs basierend auf einem Grenzsignal und des Aufteilens des Fahrbereichs in zumindest einen ersten Fahrbereich (A1) und einen zweiten Fahrbereich (A2);
einen ersten Musterfahrschritt eines sich bewegenden Roboters (100), der eine erste Musterfahrt in dem ersten Fahrbereich (A1) durchführt (S141), die das Fahren entlang einer Hauptachse (LA) der ersten Musterfahrt und das Fahren entlang einer Nebenachse (SA) der ersten Musterfahrt umfasst, wobei die Nebenachse (SA) der ersten Musterfahrt die Hauptachse (LA) der ersten Musterfahrt unter einem ersten Richtungswinkel schneidet;
einen zweiten Musterfahrschritt des sich bewegenden Roboters (100), der eine zweite Musterfahrt in dem zweiten Fahrbereich (A2) durchführt (S145), der das Fahren entlang einer Hauptachse (LA) der zweiten Musterfahrt und das Fahren entlang einer Nebenachse (SA) der zweiten Musterfahrt umfasst, wobei die Nebenachse (SA) der zweiten Musterfahrt die Hauptachse (LA) der zweiten Musterfahrt unter einem zweiten Richtungswinkel schneidet;
**gekennzeichnet durch**:
Abschließen der ersten Musterfahrt;
Abgleichen eines Richtungswinkels des sich bewegenden Roboters mit dem zweiten Richtungswinkel durch Drehen des sich bewegenden Roboters an Ort und Stelle;
Beginnen der zweiten Musterfahrt; und
Berechnen eines Werts, der aus Werten, die Winkel zwischen 85° und 95° bezüglich des ersten Richtungswinkels aufweisen, zufällig ausgewählt wird, als den zweiten Richtungswinkel.

12. Verfahren zur Steuerung eines sich bewegenden Roboters (100) nach Anspruch 11, das ferner Folgendes umfasst:
einen Bewegungsschritt des sich bewegenden Roboters (100), der sich vor dem ersten Musterfahrschritt von einer Andockvorrichtung (200) entlang einer Grenze des Fahrbereichs zu einem Anfangspunkt der ersten Musterfahrt bewegt (S130).

13. Verfahren zur Steuerung eines sich bewegenden Roboters (100) nach Anspruch 11, das ferner Folgendes umfasst:
einen Schritt der Rückkehr in die Ausgangsposition des sich bewegenden Roboters (100), der zu einer Andockvorrichtung (200) zurückkehrt (S155), wenn eine voreingestellte Zeit verstreicht (S151), nachdem der sich bewegende Roboter (100) die erste Musterfahrt beginnt.

14. Verfahren zur Steuerung eines sich bewegenden Roboters (100) nach Anspruch 11, das ferner Folgendes umfasst:
einen Schritt der Rückkehr in die Ausgangsposition des sich bewegenden Roboters (100), der zu einer Andockvorrichtung (200) zurückkehrt (S155), wenn der sich bewegende Roboter (100) bestimmt (S153), dass die verbleibende Batterieleistung nicht ausreicht, während der sich bewegende Roboter (100) die Musterfahrt durchführt.

## Revendications

1. Robot mobile (100) comportant :
un corps (110) ;
un dispositif de déplacement (120) pour mettre en mouvement le corps (110) ;
un détecteur de signal de limite (177) configuré pour détecter un signal de limite généré à une limite d'une zone de déplacement (A1, A2) ;
un capteur d'azimut (176) configuré pour calculer un angle de direction du corps (110) ; et
une commande (190) configurée pour définir la zone de déplacement (A1, A2) sur la base du signal de limite et configurée pour diviser la zone de déplacement (A1, A2) en une pluralité de zones de déplacement (A1, A2) incluant au moins une première zone de déplacement (A1) et une seconde zone de déplacement (A2),
dans lequel la commande (190) est configurée pour :
commander le dispositif de déplacement (120) de sorte que le robot mobile (110) effectue un déplacement selon un modèle comportant :
dans la première zone de déplacement (A1), un déplacement selon un premier modèle comportant un déplacement le long d'un axe principal (LA) du déplacement selon un premier modèle et un déplacement le long d'un axe secondaire (SA) du déplacement selon un premier modèle coupant l'axe principal (LA) du déplacement selon un premier modèle et entourant un premier angle de direction avec l'axe principal (LA) du déplacement selon un premier modèle et
dans la seconde zone de déplacement (A2), un déplacement selon un second modèle comportant un déplacement le long d'un axe principal (LA) du déplacement selon un second modèle et un déplacement le long d'un axe secondaire (SA) du déplacement selon un second modèle coupant l'axe principal (LA) du déplacement selon un second modèle et entourant un second angle de direction avec l'axe principal (LA) du déplacement selon un second modèle,
**caractérisé en ce que** la commande (190) est en outre configurée pour :
commander au dispositif de déplacement (120) de terminer le déplacement selon un premier modèle et d'adapter l'angle de direction au second angle de direction en faisant tourner le robot mobile sur place ;
commander au dispositif de déplacement (120) de débuter le déplacement selon un second modèle ; et
calculer une valeur, qui est sélectionnée de façon aléatoire parmi des valeurs ayant des angles de 85° à 95° par rapport au premier angle de direction, en tant que second angle de direction.

2. Robot mobile (100) selon la revendication 1, dans lequel un angle entre l'axe principal (LA) et l'axe secondaire (SA) du déplacement selon un second modèle est de 88° à 92°.

3. Robot mobile (100) selon la revendication 1, dans lequel la commande (190) est configurée pour calculer le second angle de direction de façon aléatoire.

4. Robot mobile (100) selon la revendication 1, dans lequel la commande (190) est configurée pour commander le dispositif de déplacement (120) de sorte que le robot mobile (100) commence à effectuer le déplacement selon un second modèle à une position où le robot mobile (100) termine le déplacement selon un premier modèle.

5. Robot mobile (100) selon la revendication 1, dans lequel l'axe principal concordant (LA) et/ou l'axe secondaire concordant (SA) est parallèle à une partie de la limite de la zone de déplacement concordante (A1, A2).

6. Robot mobile (100) selon la revendication 1, dans lequel le détecteur de signal de limite (177) est configuré pour détecter un signal de position d'accueil généré dans un dispositif d'accueil (200), et
la commande (190) est configurée pour commander le dispositif de déplacement (120) de sorte que le robot mobile (100) retourne au dispositif d'accueil (200) lorsqu'un temps préréglé s'écoule après que le robot mobile (100) débute le déplacement selon un premier modèle ; et/ou
dans lequel le détecteur de signal de limite (177) est configuré pour détecter un signal de position d'accueil généré dans le dispositif d'accueil (200), et
la commande (190) est configurée pour commander le dispositif de déplacement (120) de sorte que le robot mobile (100) retourne au dispositif d'accueil (200) lorsque la commande (190) détermine qu'un courant de batterie résiduel est insuffisant pendant que le robot mobile (100) réalise le déplacement selon un modèle.

7. Robot mobile (100) selon la revendication 6, dans lequel le détecteur de signal de limite (177) est configuré pour distinguer le signal de position d'accueil du signal de limite par une différence de direction d'un champ magnétique.

8. Robot mobile (100) selon la revendication 1, dans lequel une direction de déplacement étant la direction de l'axe secondaire du déplacement selon un second modèle est une direction s'éloignant d'une partie de la limite de la seconde zone de déplacement (A2).

9. Robot mobile (100) selon la revendication 1, dans lequel une direction de déplacement étant la direction de l'axe secondaire du déplacement selon un second modèle est une direction s'éloignant de la première zone de déplacement (A1).

10. Robot mobile (100) selon la revendication 1, dans lequel le détecteur de signal de limite (177) inclut un capteur de champ magnétique.

11. Procédé de commande d'un robot mobile (100), comportant :
une étape de division consistant à définir (S120) une zone de déplacement sur la base d'un signal de limite et diviser la zone de déplacement en au moins une première zone de déplacement (A1) et une seconde zone de déplacement (A2) ;
une étape de déplacement selon un premier modèle consistant à faire effectuer (S141) à un robot mobile (100) un déplacement selon un premier modèle dans la première zone de déplacement (A1), comportant un déplacement le long d'un axe principal (LA) du déplacement selon un premier modèle et un déplacement le long d'un axe secondaire (SA) du déplacement selon un premier modèle, dans lequel l'axe secondaire (SA) du déplacement selon un premier modèle coupe l'axe principal (LA) du déplacement selon un premier modèle à un premier angle de direction ;
une étape de déplacement selon un second modèle consistant à faire effectuer (S145) au robot mobile (100) un déplacement selon un second modèle dans la seconde zone de déplacement (A2), comportant un déplacement le long d'un axe principal (LA) du déplacement selon un second modèle et un déplacement le long d'un axe secondaire (SA) du déplacement selon un second modèle, dans lequel l'axe secondaire (SA) du déplacement selon un second modèle coupe l'axe principal (LA) du déplacement selon un second modèle à un second angle de direction ; **caractérisé par** les étapes consistant à :
terminer le déplacement selon un premier modèle ;
adapter un angle de direction du robot mobile au second angle de direction en faisant tourner le robot mobile sur place ;
débuter le déplacement selon un second modèle ; et
calculer une valeur, qui est sélectionnée de façon aléatoire parmi des valeurs ayant des angles de 85° à 95° par rapport au premier angle de direction, en tant que second angle de direction.

12. Procédé de commande d'un robot mobile (100) selon la revendication 11, comportant en outre :
une étape de déplacement consistant à déplacer (S130) le robot mobile (100) jusqu'à un point de départ du déplacement selon un premier modèle le long d'une limite de la zone de déplacement à partir d'un dispositif d'accueil (200) avant l'étape de déplacement selon un premier modèle.

13. Procédé de commande d'un robot mobile (100) selon la revendication 11, comportant en outre :
une étape de retour en position initiale consistant à ramener (S155) le robot mobile (100) jusqu'à un dispositif d'accueil (200) lorsqu'un temps préréglé s'écoule (S151) après que le robot mobile (100) débute le déplacement selon un premier modèle.

14. Procédé de commande d'un robot mobile (100) selon la revendication 11, comportant en outre :
une étape de retour en position initiale consistant à ramener (S155) le robot mobile (100) jusqu'à un dispositif d'accueil (200) lorsque le robot mobile (100) détermine (S153) qu'un courant de batterie résiduel est insuffisant pendant que le robot mobile (100) effectue le déplacement selon un modèle.
